# EUROPÄISCHE PATENTSCHRIFT

(11) **EP 2 315 961 B1**
(45) Veröffentlichungstag und Bekanntmachung des Hinweises auf die Patenterteilung: **29.10.2014**
(21) Anmeldenummer: 09777845.0
(22) Anmeldetag: 12.08.2009
(51) Int. Cl.: F16D 3/79, F16D 3/72

(54) **AXIAL STECKBARE WELLENKUPPLUNG**
AXIALLY INSERTABLE SHAFT COUPLING
ACCOUPLEMENT D'ARBRES AXIALEMENT ENFICHABLE

(30) Priorität: 29.08.2008 DE 102008044892
(43) Veröffentlichungstag der Anmeldung: 04.05.2011
(73) Patentinhaber: Chr. Mayr GmbH + Co. KG, 87665 Mauerstetten (DE)
(72) Erfinder: MAYR, Fritz, 87665 Mauerstetten (DE); VOGL, Norbert, 86935 Rott (DE)
(74) Vertreter: Ruschke, Hans Edvard
(86) Internationale Anmeldenummer: PCT/EP2009/005862
(87) Internationale Veröffentlichungsnummer: WO 2010/022862

(56) Entgegenhaltungen:
- DE-C- 274 802
- DE-U1- 8 702 203
- GB-A- 2 008 718
- US-A- 2 245 764
- US-A1- 2002 022 527

## Beschreibung

Im Bereich der Antriebstechnik ist es häufig erforderlich, zwischen Einzelaggregaten, beispielsweise Motoren, Getrieben, Spindeln etc. drehmomentübertragende Verbindungen mittels Kupplungen herzustellen. Derartige Kupplungen müssen dabei in der Regel Montage- und/oder Fertigungsungenauigkeiten der Aggregate in lateraler, winkeliger und axialer Richtung ausgleichen. Typische Beispiele für derartige Kupplungen sind sog. Balg- und/oder Lamellenkupplungen.

Die Verbindung zwischen der Kupplung und den meist zylindrischen Wellen der Antriebsaggregate wird heute in zunehmendem Maße durch spielfreie reibschlüssige Welle-Nabe-Verbindungen, beispielsweise Radialklemmnaben, Spannringnaben oder Konusbuchsen hergestellt, die bei der Montage das Anziehen einer oder mehrerer Schrauben erfordern.

Dabei gibt es Anwendungsfälle, bei denen diese Schrauben nach dem Fügen einer konventionellen Kupplung auf den Wellen nicht mehr zugänglich sind. Als Lösung für derartige Aufgabenstellungen haben sich am Markt sogenannte axial steckbare Wellenkupplungen etabliert wie sie z. B. im Prospekt "Servostar" der Firma Tandler beschrieben werden. Derartige Kupplungen bestehen grundsätzlich aus zwei oder mehreren Kupplungsteilen und werden separat auf die Wellen von An- und Abtriebsseite montiert. Erst danach werden die Antriebsaggregate mit den montierten Kupplungshälften meist in sogenannter "Blindmontage" axial zusammengefahren. Dabei wird über die Verzahnungen in der axialen Steckverbindung die das Drehmoment übertragende Verbindung hergestellt.

Zur dauerhaft spielfreien Drehmomentübertragung muss die axiale Steckverbindung im Betrieb in der Regel mit einer permanenten axialen Vorspannung beaufschlagt werden. Daher kommt es bei bekannten Konstruktionen axial steckbarer Wellenkupplungen häufig vor, dass sich die Verzahnungen der Steckverbindung nach längerer Betriebsdauer festsetzen. Soll die axiale Verbindung der Kupplungshälften, zum Bsp. im Zuge einer Demontage, wieder getrennt werden, lässt sich eine festgesetzte axiale Steckverbindung nur mit stark erhöhter Zugkraft in axialer Richtung wieder lösen. Da diese Zugkraft meist über der zulässigen Axialbelastung des Ausgleichselementes (z.B. des Balgs oder des Lammellenpaketes) der Kupplung liegt, besteht hier ein hohes Risiko, die Kupplung bleibend zu schädigen.

US 2002/0022527 A1 offenbart eine gattungsgemäße Ausgleichskupplung.

Aufgabe der vorliegenden Erfindung ist es demnach, ein System zu schaffen, das eine Schädigung des Ausgleichselementes der Kupplung in Folge zu großer axialer Belastung bei der Demontage der Steckverbindung mit hoher Sicherheit vermeidet.

Die Aufgabe wird erfindungsgemäß durch die Merkmale der unabhängigen Ansprüche gelöst, wobei parallel zum Ausgleichselement der Kupplung interne Axialanschläge geschaffen werden, über die die zur Trennung der Steckverbindungen notwendige axiale Zugkraft geleitet wird, um eine Überbelastung und damit eine Schädigung des Ausgleichelements infolge der axialen Zugkraft zu verhindern.
**Figur 1** zeigt eine perspektivische Darstellung einer steckbaren Kupplung in Balgbauweise mit den erfindungsgemäßen (aber hier nicht sichtbaren) Anschlägen vor dem Fügen der axialen Steckverbindung.
**Figur 2** zeigt eine Schnittdarstellung der Kupplung aus Figur 1 vor dem Fügen der Steckverbindung. Die erfindungsgemäßen Axialanschläge werden in dieser ersten Ausführungsform der Erfindung durch kurze Gewindebereiche mit jeweils axial dahinter liegenden Gewindefreistichen gebildet. Die Ausschnitt-Vergrößerung (A) verdeutlicht, dass die erfindungsgemäßen Axialanschläge vor dem Fügen ein nur geringes axiales Spiel AS aufweisen.
**Figur 3** zeigt einen Schnitt der Kupplung aus Figur 1 mit gefügter Steckverbindung bei gleichzeitiger axialer Druck-Vorspannung des Balges. Die Ausschnitt-Vergrößerung (A) verdeutlicht das durch die axiale Druckvorspannung größere axiale Spiel AS.
**Figur 4** stellt eine perspektivische Darstellung einer steckbaren Kupplung in Lamellenbauweise mit den erfindungsgemäßen (aber hier nicht sichtbaren) Anschlägen vor dem Fügen der axialen Steckverbindung dar.
**Figur 5** ist eine Explosions-Darstellung der Kupplung aus Figur 4 und zeigt die entsprechend einer zweiten Ausführungsform der Erfindung als Bajonettmechanismus ausgestalteten Axialanschläge.
**Figur 6** zeigt einen Schnitt der Kupplung aus Figur 4 und 5 nach dem Fügen der Steckverbindung, und zwar noch ohne axiale Druck-Vorspannung des Lamellenpaketes. Die Ausschnitt-Vergrößerung (A) verdeutlicht, dass die erfindungsgemäßen Anschläge ohne axiale Druckvorspannung nur ein geringes axiales Spiel AS aufweisen.
**Figur 7** zeigt einen Schnitt der Kupplung aus Figur 6 mit gefügter Steckverbindung bei axial auf Druck vorgespanntem Lamellenpaket, sowie eine Ausschnitt-Vergrößerung (A) dazu. Die Anschläge weisen infolge der axialen DruckVorspannung ein größeres axiales Spiel AS auf.
**Figur 8** stellt eine steckbare Kupplung in Balgbauweise im Schnitt dar, bei der die erfindungsgemäßen Anschläge entsprechend einer dritten Ausführungsform der Erfindung durch radial federnde Laschen/Widerhaken gebildet werden, sowie eine Ausschnitt-Vergrößerung dazu.

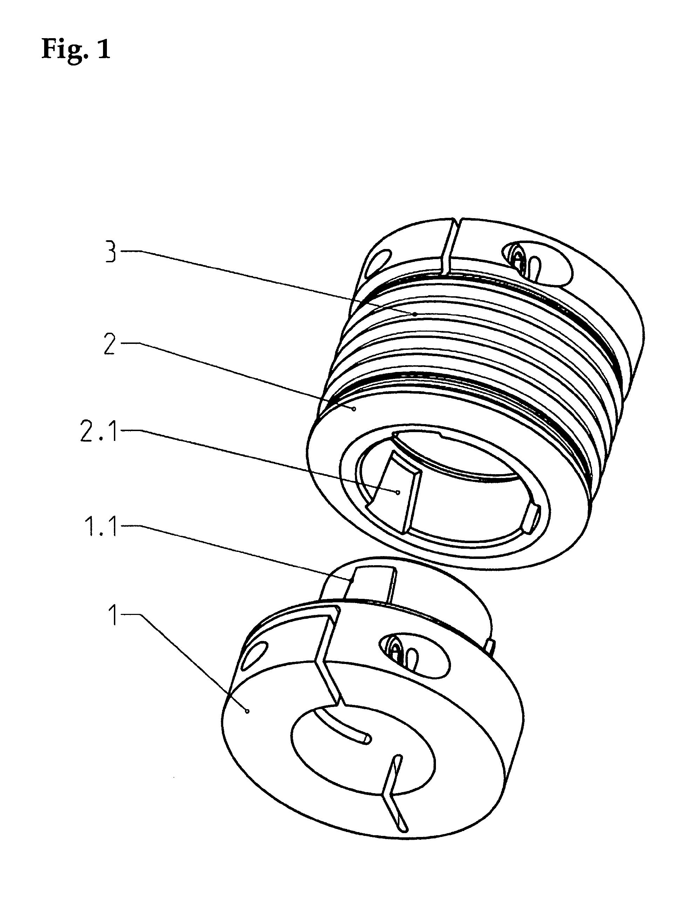

Die Darstellung der steckbaren Kupplung in **Figur 1** zeigt die beiden Kupplungshälften, nämlich die Stecknabe 1 mit den konisch geformten Nocken 1.1 und die Zentriernabe 2 mit den zu den Nocken 1.1 komplementär geformten konisch ausgebildeten Ausnehmungen 2.1. Als Ausgleichselement der Kupplung dient in Figur 1 ein drehsteifer Balg 3.

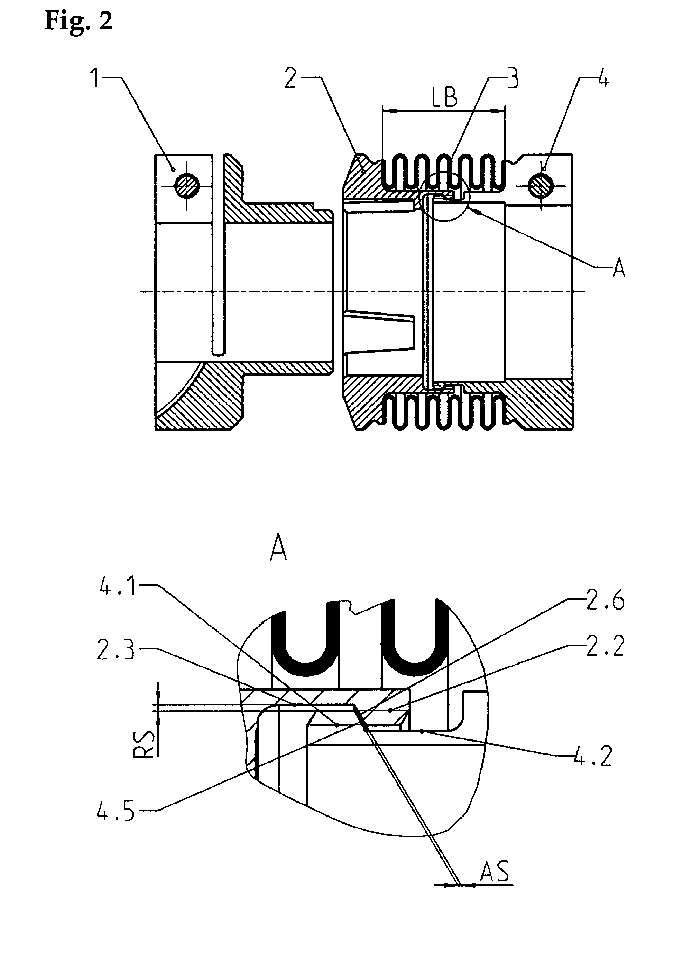

In der Schnittdarstellung der **Figur 2** ist eine erste Ausführungsform der Erfindung als interner Axialanschlag zwischen der Zentriernabe 2 und der Kupplungsnabe 4 dargestellt. Bei dieser ersten Ausführungsform bilden ein Innengewinde 2.2 der Zentriernabe 2 mit anschließendem Zentriernaben-Freistich 2.3 und ein Außengewinde 4.1 der Kupplungsnabe 4 mit anschließendem Kupplungsnaben-Freistich 4.2 den erfindungsgemäßen Axialanschlag. Bei einer axialen Zugbelastung der Kupplung bewirkt dieser Axialanschlag, dass die Zugkräfte an dem vor Zugbelastung zu schützenden Balg vorbei geleitet werden. Eine an der Stecknabe 1 eingeleitete Zugkraft wird bei festsitzender Steckverbindung zwischen Stecknabe 1 und Zentriernabe 2 über den Axialanschlag direkt auf die Kupplungsnabe geleitet. Wesentlich dabei ist, dass die Zentriernaben-Innenflanke 2.6 und die Kupplungsnaben-Innenflanke 4.5 an einander anliegen und den Kraftfluss herstellen.

Bei der Montage der Einheit von Zentriernabe 2 und Kupplungsnabe 4 werden die beiden Teile mit dazwischen eingelegtem Balg 3 ineinander geschraubt, bis die beiden Gewindebereiche jeweils im gegenüberliegenden Freistich des Gegenstückes liegen, dann erfolgt die dauerhafte Verbindung zwischen Balg 3 und Zentriernabe 2 bzw. Kupplungsnabe 4 durch Schweißen, Kleben oder ein anderes geeignetes Fügeverfahren.

In der Darstellung der Figur 2 ist die Steckverbindung der Kupplung noch nicht gefügt, weshalb der Balg 3 noch seine ungespannte Ausgangslänge LB aufweist. Dabei haben die Zentriernaben-Innenflanke 2.6 und die Kupplungsnaben-Innenflanke 4.5 der beiden Gewinde keinen Abstand oder liegen sich mit nur geringem axialem Spiel AS gegenüber (Siehe Ausschnitt A der Figur 2).

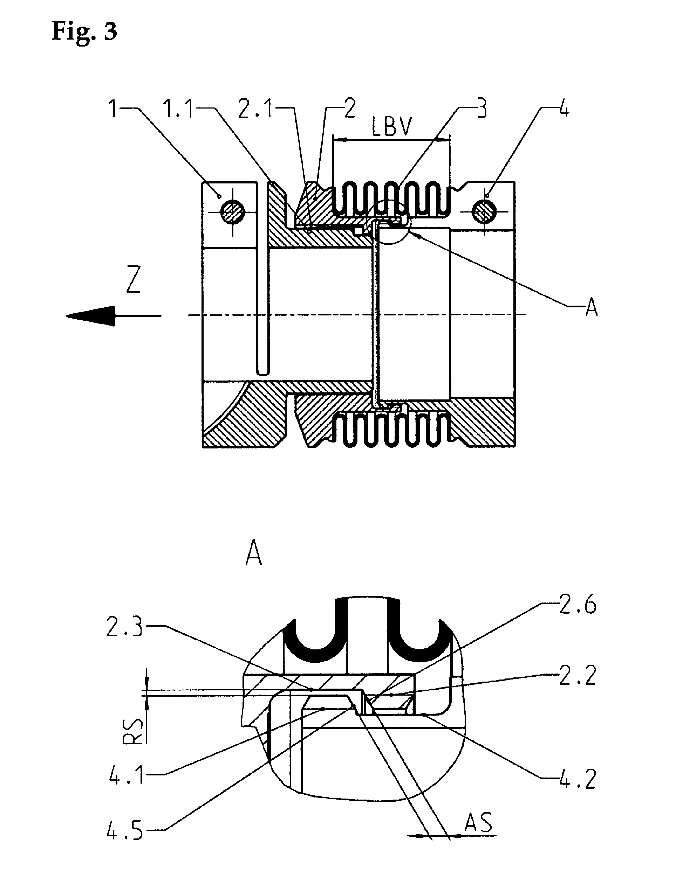

Figur 3 stellt die Kupplung aus Figur 1 bzw. Figur 2 im gefügten Zustand dar. Dabei greifen die konischen Nocken 1.1 der Stecknabe 1 in die komplementär geformten konischen Ausnehmungen 2.1 der Zentriernabe 2 und werden durch die Federung des axial vorgespannten Balges 3 drehspielfrei im Eingriff miteinander gehalten. Durch die axiale Vorspannung verkürzt sich die Ausgangslänge LB des Balges 3 auf die Vorspannlänge LBV.

In diesem Zustand liegen das Innengewinde 2.2 bzw. das Außengewinde 4.1 berührungsfrei im Kupplungsnaben-Freistich 4.2 bzw. im Zentriernaben-Freistich 2.3 (siehe Ausschnitt A der Fig. 3).

Das axiale Spiel AS zwischen Zentriernaben-Innenflanke 2.6 und Kupplungsnaben- Innenflanke 4.5 der Gewinde ist daher gegenüber dem in Figur 2 dargestellten axialen Spiel AS deutlich vergrößert (siehe Ausschnitt A der Figur 3).

In Figur 2 und Figur 3, jeweils Ausschnitt A, ist außerdem zwischen dem Außendurchmesser des Kupplungsnaben-Gewindes 4.1 und dem Zentriernaben-Freistich 2.3 das radiale Spiel RS dargestellt. Bei zunehmender radialer Verlagerung des Ausgleichselementes der Kupplung, hier des Balges 3, nimmt das radiale Spiel RS ab, bis der Außendurchmesser des Kupplungsnaben-Gewindes 4.1 am Zentriernaben-Freistich 2.3 anliegt. Durch entsprechende Dimensionierung des Radialspiels RS kann somit die mögliche Lateralverlagerung der Kupplung auf ein Maß begrenzt werden, das vom Ausgleichselement, hier dem Balg 3 dauerhaft ohne Schäden überbrückt wird.

Bei der Demontage der Kupplung durch axiales Ziehen der Stecknabe 1 in Richtung Z (siehe Fig. 3) wird zunächst der Balg 3 elastisch gelängt, bis die Zentriernaben-Innenflanke 2.6 und die Kupplungsnaben-Innenflanke 4.5 von Innengewinde 2.2 und Außengewinde 4.1 als Anschläge an einander anliegen (siehe z. B. Ausschnitt A in Figur 2). Dadurch dass die Zentriernaben-Innenflanke 2.6 und die Kupplungsnaben-Innenflanke 4.5 aneinander anliegen wird der Kraftfluss in axialer Richtung statt über den Balg 3 über den Anschlag geleitet.

Eine weitere Längung des Balgs 3 bis zur Beschädigung wird dadurch bei weiterer Steigerung der Kraft in Richtung Z effektiv verhindert.

Bei weiterer Steigerung der Kraft in Richtung Z (Fig. 3) kommt es dann zur angestrebten Trennung der festsitzenden Verbindung der konischen Nocken 1.1 und der konischen Ausnehmungen 2.1.

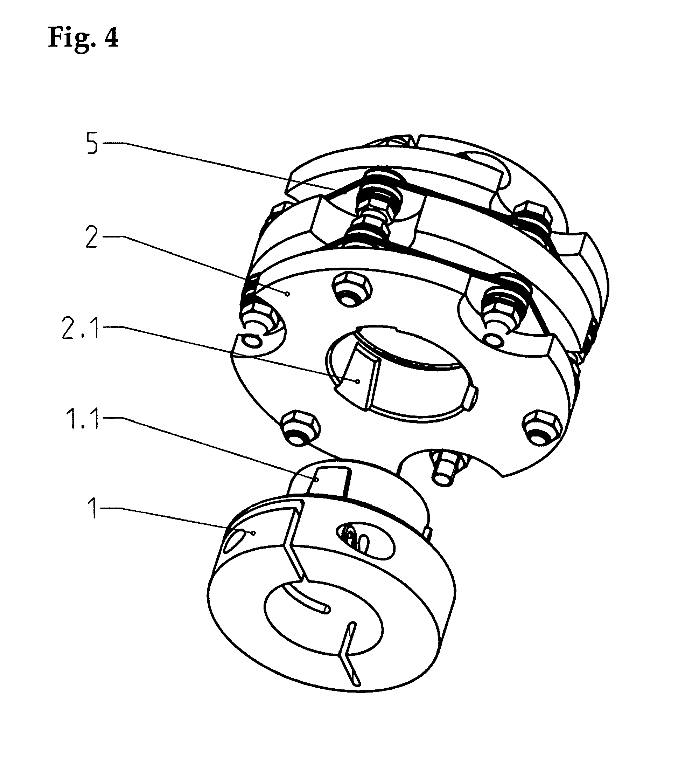

Die Darstellung der Kupplung in **Figur 4** zeigt eine Steckkupplung, bei der die beiden Kupplungshälften ebenfalls als Stecknabe 1 mit konisch geformten Nocken 1.1 und als Zentriernabe 2 mit zu den Nocken 1.1 komplementär geformten konisch ausgebildeten Ausnehmungen 2.1 ausgebildet sind. Als elastische Ausgleichselemente zwischen den beiden Kupplungshälften der Kupplung dienen in der Figur 4 zwei drehsteife elastische Lamellenpakete 5, wie sie im Stand der Technik bekannt sind.

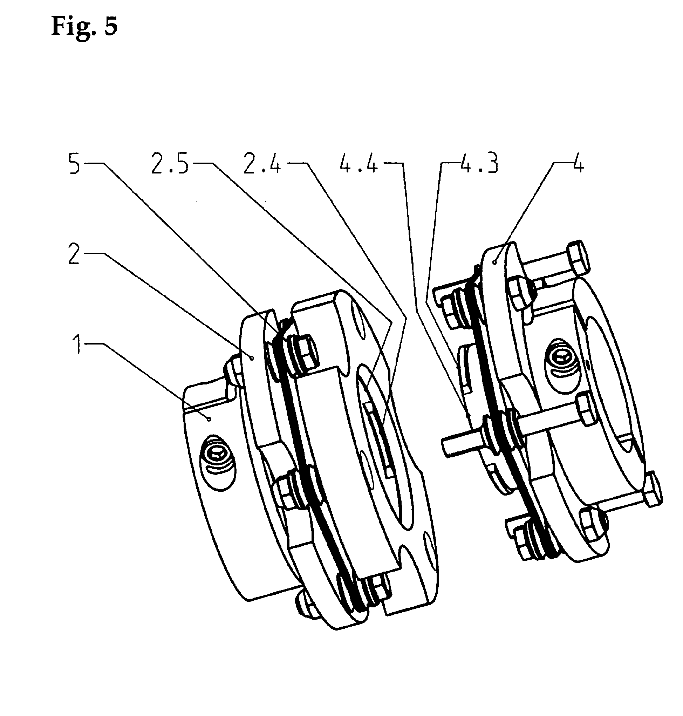

In **Figur 5** ist die erfindungsgemäße Kupplung der Fig. 4 mit den Ausgleichselementen auf Basis von Lamellenpaketen 5 in einer Explosionsdarstellung zu sehen. Dabei wird die Funktion der Anschläge, die in der ersten Ausführungsform der Erfindung (Fig. 1-3) durch Gewinde bzw. Freistiche verwirklicht wird, durch einen Bajonettmechanismus erzielt. Dieser Bajonettmechanismus wird axial "Nocke 2.4/4.3 auf Aussparung 2.5/4.4" gefügt und anschließend werden Zentriernabe 2 und Kupplungsnabe 4 um den halben Betrag der Nocken- bzw. Aussparungs-Teilung verdreht. Dadurch werden die Nocken der Zentriernabe 2.4 und die Nocken der Kupplungsnabe 4.3 so ausgerichtet, dass sie bei einer Zugbelastung die erfindungsgemäße Funktion als Axialanschlag in Zugrichtung übernehmen können.

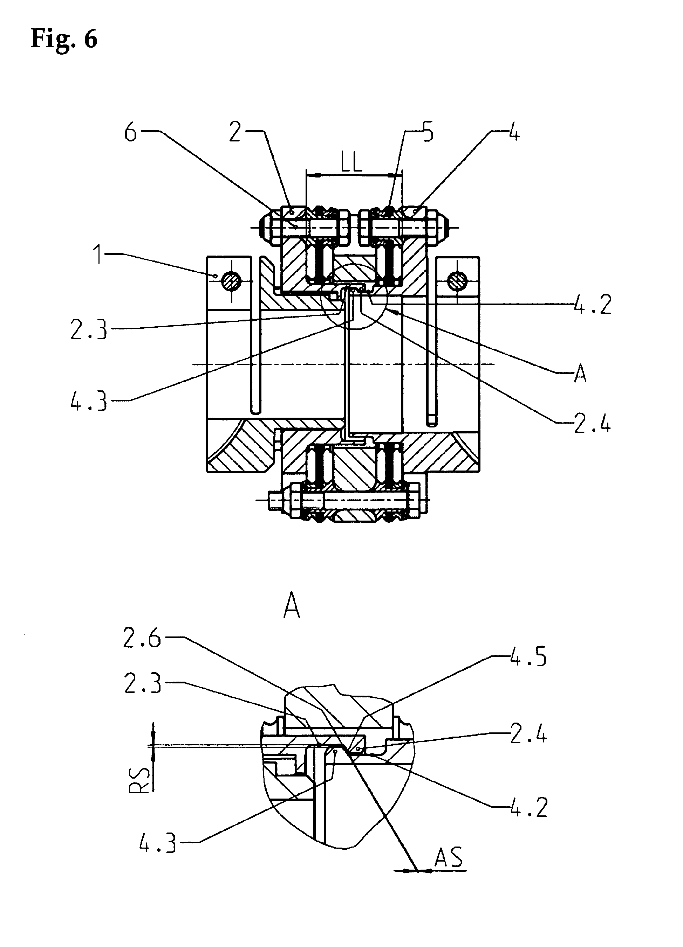

**Figur 6** stellt die Kupplung aus Figur 4 und 5 im Schnitt dar. Bei der Montage von Zentriernabe 2 und Kupplungsnabe 4 werden die beiden Teile mit dazwischen eingelegten Lamellenpaketen 5 ineinander gesteckt, bis die Nocken 2.4/4.3 von Zentriernabe 2 und Kupplungsnabe 4 aneinander vorbei im jeweils axial dahinter liegenden Freistich des Gegenstückes liegen.

Anschließend erfolgt eine Verdrehung von Zentriernabe 2 und Kupplungsnabe 4 gegeneinander um etwa die halbe Nockenteilung, dann wird die Verbindung zwischen Lamellenpaketen 5 und Zentriernabe 2 bzw. Kupplungsnabe 4 durch Schrauben 6 oder ein anderes geeignetes Fügeverfahren (z. B. Nieten) hergestellt.

Die in Fig. 6 dargestellte Kupplung ist noch nicht axial auf Druck vorgespannt, dadurch weist das Lamellenpaket noch die ungespannte Baulänge LL auf. Die Zentriernaben-Innenflanken 2.6 und die Kupplungsnaben-Innenflanken 4.5 der Zentriernaben-Nocken 2.4 bzw. Kupplungsnaben-Nocken 4.3 liegen dabei direkt aneinander an oder weisen nur ein geringes axiales Spiel AS auf (siehe Ausschnitt A der Figur 6).

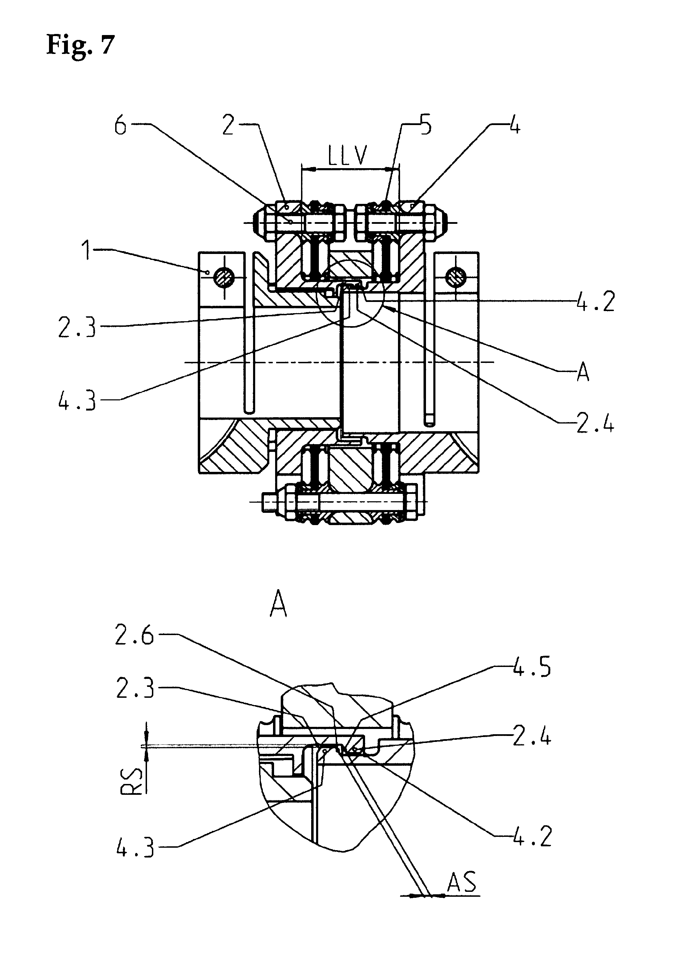

In **Figur 7** ist die Kupplung aus Figur 6 ebenfalls im Längsschnitt zu sehen, allerdings im axial auf Druck vorgespannten Zustand, wobei die Lamellenkonstruktion die gespannte Baulänge LLV aufweist. Hier liegt zwischen den Zentriernaben-Nocken 2.4 und den Kupplungsnaben-Nocken 4.3 ein deutlich größeres axiales Spiel AS vor (siehe Ausschnitt A der Figur 7). Die Kupplung der Figur 6 bzw. der Figur 7, jeweils Ausschnitt A, weisen das definierte radiale Spiel RS auf, wodurch das Ausgleichselement der Kupplung, hier die Lamellenpakete 5, vor überhöhtem Lateralversatz geschützt werden kann. Dazu muss das radiale Spiel (RS) so bemessen sein, dass der durch das radiale Spiel mögliche Lateralversatz nicht größer ist als die entsprechende zulässige Belastung des Ausgleichselements.

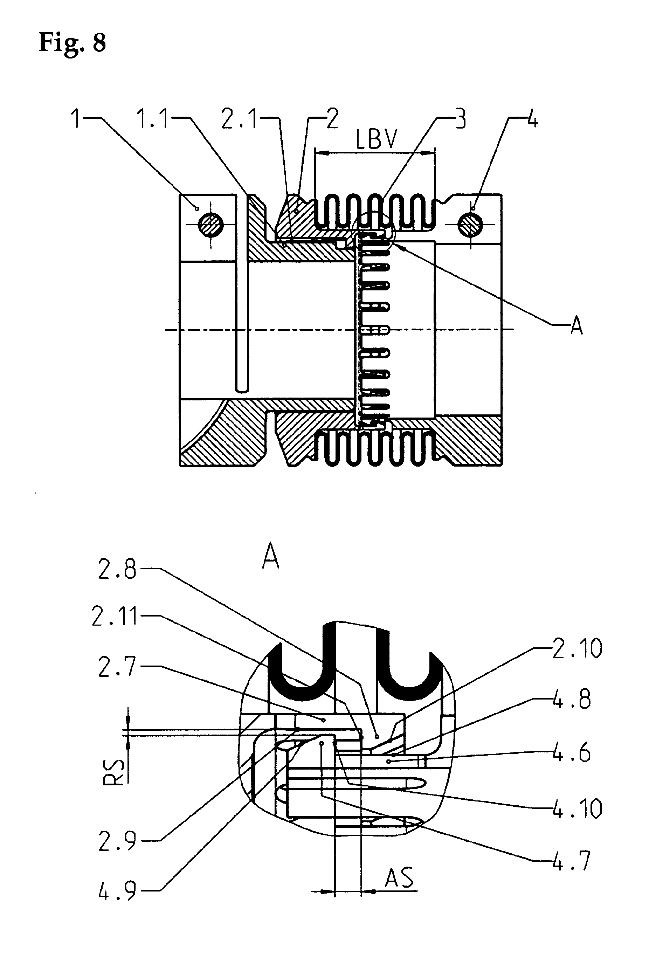

**Figur 8** zeigt eine Kupplung in Balgbauweise im Schnitt, bei der die erfindungsgemäßen axialen Anschläge entsprechend einer dritten Ausführungsform der Erfindung in beiden Richtungen durch radial federnde Laschen 2.7/4.6 gebildet werden, die mit der Zentriernabe 2 und der Kupplungsnabe 4 fest verbunden sind und jeweils einen hakenförmigen Vorsprung 2.8/4.7 sowie eine als Rücksprung 2.9/4.8 ausgeführte Freimachung umfassen.

Bei der Montage von Zentriernabe 2 und Kupplungsnabe 4 werden diese mit dem dazwischen angeordneten Balg 3 zusammengesteckt, bis die Vorsprünge 2.8/4.7 übereinander gleiten, federnd radial nach innen bzw. radial nach außen ausweichen, bis sie im entsprechenden Rücksprung 2.9/4.8 des Gegenstückes einrasten.

Die Vorderflanken 2.10/4.9 der Vorsprünge 2.8/4.7 weisen dabei einen Winkel in einer solchen Größenordnung auf, dass die Vorsprünge beim Fügen übereinander gleiten können und die radiale Verformung nach innen bzw. außen ermöglicht wird.

Der Winkel der Rückflanken 2.11/4.10 der Vorsprünge 2.8/4.7 weisen einen Winkel nahe 90° auf, so dass eine axiale Zugkraft nicht zu einer radialen elastischen Verformung der Laschen 2.7/4.6 führt. Stattdessen bilden die bei Zugbelastung aneinander anliegenden Flanken in axialer Richtung einen erfindungsgemäßen steifen Anschlag.

Die in Figur 8 dargestellte Kupplung weist bereits eine axiale Vorspannung des Ausgleichselementes, hier des Balges 3 auf, so dass zwischen den Rückflanken der Zentriernaben-Laschen 2.11 und den Rückflanken der Kupplungsnaben-Laschen 4.10 ein vergrößertes axiales Spiel AS vorliegt (siehe Ausschnitt A der Figur 8).

### Bezugszeichenliste:

- **1**: **Stecknabe**
- 1.1: Stecknaben-Nocke
- **2**: **Zentriernabe**
- 2.1: Zentriernaben-Ausnehmung
- 2.2: Zentriernaben-Innengewinde
- 2.3: Zentriernaben-Freistich
- 2.4: Zentriernaben-Nocke
- 2.5: Zentriernaben-Aussparung
- 2.6: Zentriernaben-Innenflanke
- 2.7: Laschen der Zentriernabe
- 2.8: Laschen-Vorsprung der Zentriernabe
- 2.9: Laschen-Rücksprung der Zentriernabe
- 2.10: Laschen-Vorderflanke der Zentriernabe
- 2.11: Laschen-Rückflanke der Zentriernabe
- **3**: **Balg**
- **4**: **Kupplungsnabe**
- 4.1: Kupplungsnaben-Außengewinde
- 4.2: Kupplungsnaben-Freistich
- 4.3: Kupplungsnaben-Nocke
- 4.4: Kupplungsnaben-Aussparung
- 4.5: Kupplungsnaben-Innenflanke
- 4.6: Lasche der Kupplungsnabe
- 4.7: Laschen-Vorsprung der Kupplungsnabe
- 4.8: Laschen-Rücksprung der Kupplungsnabe
- 4.9: Laschen-Vorderflanke der Kupplungsnabe
- 4.10: Laschen-Rückflanke der Kupplungsnabe
- **5**: **Lamellenpaket**
- **6**: **Lamellenpaket-Schraube**
- **LB**: Kupplungslänge mit Balg, ungespannt
- **LBV**: Kupplungslänge mit Balg, vorgespannt auf Druck
- **LL**: Kupplungslänge mit Lamellenpaket, ungespannt
- **LLV**: Kupplungslänge mit Lamellenpaket, vorgespannt auf Druck
- **RS**: Radiales Spiel des Anschlagsmechanismus
- **AS**: Axiales Spiel des Anschlagsmechanismus

## Patentansprüche

1. Ausgleichskupplung zur Drehmoment übertragenden Verbindung zweier Wellen mit der Möglichkeit, axiale, winkelige oder laterale Versätze durch ein axiales Ausgleichselement (3,5) auszugleichen, wobei zwischen den fest mit dem Ausgleichselement (3, 5) der Kupplung verbundenen Nabenteilen (2, 4) ein oder mehrere axial auf Zug wirksame Anschläge (2.2/2.4/2.7 bzw. 4.1/4.3/4.6) existieren, um Beschädigungen am Ausgleichselement (3, 5) durch überhöhte axiale Zugkräfte zu verhindern, **dadurch gekennzeichnet, dass** die Kupplung auf mindestens einer Seite axial steckbar ausgeführt ist und der oder die axialen Anschläge durch zwei in den Nabenhälften befindliche komplementäre Gewinde (2.2; 4.1) gebildet werden, die bis zum gegenseitigen axialen Austritt an der Rückseite ineinander geschraubt sind und in den jeweiligen Freistichen (2.3; 4.2) des Gegengewindes liegen.

2. Ausgleichskupplung zur Drehmoment übertragenden Verbindung zweier Wellen mit der Möglichkeit, axiale, winkelige oder laterale Versätze durch ein axiales Ausgleichselement (3, 5) auszugleichen, wobei zwischen den fest mit dem Ausgleichselement (3, 5) der Kupplung verbundenen Nabenteilen (2, 4) ein oder mehrere axial auf Zug wirksame Anschläge (2.2/2.4/2.7 bzw. 4.1/4.3/4.6) existieren, um Beschädigungen am Ausgleichselement (3, 5) durch überhöhte axiale Zugkräfte zu verhindern, **dadurch gekennzeichnet, dass** die Kupplung auf mindestens einer Seite axial steckbar ausgeführt ist und der oder die axialen Anschläge durch mit den Nabenteilen (2,4) verbundene radial federnde Laschen gebildet werden, die durch deren sägezahnartige geometrische Form beim axialen Fügen ineinander einrasten und bei der Demontage der Steckverbindung der Kupplung auf Zug belastbar sind.

3. Ausgleichskupplung zur Drehmoment übertragenden Verbindung zweier Wellen mit der Möglichkeit, axiale, winkelige oder laterale Versätze durch ein axiales Ausgleichselement (3, 5) auszugleichen, wobei zwischen den fest mit dem Ausgleichselement (3, 5) der Kupplung verbundenen Nabenteilen (2, 4) ein oder mehrere axial auf Zug wirksame Anschläge (2.2/2.4/2.7 bzw. 4.1/4.3/4.6) existieren, um Beschädigungen am Ausgleichselement (3, 5) durch überhöhte axiale Zugkräfte zu verhindern; **dadurch gekennzeichnet, dass** die Kupplung auf mindestens einer Seite axial steckbar ausgeführt ist und der oder die axialen Anschläge durch bajonettverschlussartige Geometrien der beiden Nabenteile (2, 4) gebildet werden.

4. Ausgleichskupplung nach einem der Ansprüche 1, 2 oder 3, **dadurch gekennzeichnet, dass** das Ausgleichselement (3, 5) der Kupplung ein Balg (3), vorzugsweise ein Metallbalg ist.

5. Ausgleichskupplung nach einem der Ansprüche 1, 2 oder 3, **dadurch gekennzeichnet, dass** das Ausgleichselement (3, 5) der Kupplung ein Lamellenpaket (5), vorzugsweise ein Stahl-Lamellenpaket ist.

6. Ausgleichskupplung nach einem der Ansprüche 1, 2 oder 3, **dadurch gekennzeichnet, dass** die beschriebenen Anschläge mittels Gewinde, Bajonett oder radial federnden Laschen konzentrisch zur Mittelachse der Kupplung angeordnet sind.

7. Ausgleichskupplung nach einem der Ansprüche 1 bis 5, **dadurch gekennzeichnet, dass** der oder die axialen Anschläge mit einem radialen Spiel zueinander in einer Größe versehen sind, dass bei Erreichen des zulässigen Lateralversatzes des Ausgleichselementes (3, 5) die Anschlagelemente radial aneinander anschlagen und somit überhöhte Lateralversätze der Kupplung verhindern.

## Claims

1. Compensating coupling for interconnecting a pair of shafts for torque-transmission with the possibility of compensating axial, angular or lateral misalignment by means of an axial compensating element (3, 5), with one or more abutments (2.2/2.4/2.7 or 4.1/4.3/4.6 respectively) existing between the hub portions (2, 4) and fixed to the compensating element (3, 5) of the coupling and acting axially in response to tension so as to prevent damage to the compensating element (3, 5) by excessive axial tension, **characterized by** the coupling being configured on at least one side to be mounted on the associated shaft and by the axial abutment(s) being formed by a pair of complementary threaded sections (2.2; 4.1) in the two halves of the hub, said threaded sections screwed into each other until they exit axially at the rear and enter respective grooves (2.3; 4.2) machined into their counterpart threads.

2. Compensating coupling for interconnecting a pair of shafts for torque-transmission with the possibility of compensating axial, angular or lateral misalignment by means of an axial compensating element (3, 5), with one or more abutments (2.2/2.4/2.7 or 4.1/4.3/4.6 respectively) existing between the hub portions (2, 4) and fixed to the compensating element (3, 5) of the coupling and acting axially in response to tension so as to prevent damage to compensating element (3, 5) by excessive axial tension, **characterized by** the coupling being configured on at least one side to be mounted on the associated shaft and by the abutment(s) being formed by a plurality of radially resilient lugs connected with the hub portions (2, 4) and having a sawtooth-like geometry to engage each other as they are joined up, said lugs adapted to sustain tensile loading when the inserted connection of the coupling is disassembled.

3. Compensating coupling for interconnecting a pair of shafts for torque-transmission with the possibility of compensating axial, angular or lateral misalignment by means of an axial compensating element (3, 5), with one or more abutments (2.2/2.4/2.7 or 4.1/4.3/4.6 respectively) existing between the hub portions (2, 4) and fixed to compensating element (3, 5) of the coupling and acting axially in response to tension so as to prevent damage to compensating element (3, 5) by excessive axial tension, **characterized by** the coupling being configured on at least one side to be mounted on the associated shaft and by the abutment(s) being formed by bayonet-lock-like geometries of the pair of hub portions (2, 4).

4. Compensating coupling as in any one of claims 1, 2 or 3, **characterized by** compensating element (3, 5) of the coupling comprising a bellows (3), preferably a metal bellows.

5. Compensating coupling as in any one claims 1, 2 or 3, **characterized by** compensating element (3, 5) of said coupling comprising a pack of disks (5), preferably a pack of steel disks.

6. Compensating coupling as in any one claims 1, 2 or 3, **characterized in that** the described abutments in form of said threaded sections or of said bayonet mechanism or of radially resilient lugs are arranged to be concentric relative to the central axis of the coupling.

7. Compensating coupling as in any one of claims 1 to 5, **characterized by** the axial abutment(s) having therebetween a radial clearance such that, when the permissible lateral offset of compensating elements (3, 5) is reached, the abutments contact each other radially, thereby preventing excessive lateral offsets in the coupling.

## Revendications

1. Accouplement d'équilibrage pour la liaison de transmission du couple de rotation de deux arbres, avec la possibilité de compenser des déports axiaux, angulaires ou latéraux, par un élément d'équilibrage axial (3, 5), une ou plusieurs butées (2.2/2.4/2.7 et/ou 4.1/4.3/4.6), actives en traction dans la direction axiale, existant entre les parties de moyeu (2, 4) assemblées fixement avec l'élément d'équilibrage (3, 5) de l'accouplement, afin d'empêcher des détériorations sur l'élément d'équilibrage (3, 5) par des forces de traction axiales excessives, **caractérisé en ce que** l'accouplement est enfichable dans la direction axiale sur au moins un côté et la ou les butées axiales sont formées par deux filetages complémentaires (2.2 ; 4.1), situés dans les moitiés de moyeu, lesquels sont vissés l'un dans l'autre jusqu'à la sortie mutuelle axiale sur le côté arrière et se situent dans les gorges respectives (2.3 ; 4.2) du contre-filetage.

2. Accouplement d'équilibrage pour la liaison de transmission du couple de rotation de deux arbres, avec la possibilité de compenser des déports axiaux, angulaires ou latéraux, par un élément d'équilibrage axial (3, 5), une ou plusieurs butées (2.2/2.4/2.7 et/ou 4.1/4.3/4.6), actives en traction dans la direction axiale, existant entre les parties de moyeu (2, 4) assemblées fixement avec l'élément d'équilibrage (3, 5) de l'accouplement, afin d'empêcher des détériorations sur l'élément d'équilibrage (3, 5) par des forces de traction axiales excessives, **caractérisé en ce que** l'accouplement est enfichable dans la direction axiale sur au moins un côté et la ou les butées axiales sont formées par des éclisses élastiques dans la direction radiale, assemblées avec les parties de moyeu (2, 4), lesquelles s'enclenchent l'une dans l'autre lors du jointoiement axial par leur forme géométrique en dents de scie et peuvent être sollicitées en traction lors du démontage de l'assemblage enfichable de l'accouplement.

3. Accouplement d'équilibrage pour la liaison de transmission du couple de rotation de deux arbres, avec la possibilité de compenser des déports axiaux, angulaires ou latéraux, par un élément d'équilibrage axial (3, 5), une ou plusieurs butées (2.2/2.4/2.7 et/ou 4.1/4.3/4.6), actives en traction dans la direction axiale, existant entre les parties de moyeu (2, 4) assemblées fixement avec l'élément d'équilibrage (3, 5) de l'accouplement, afin d'empêcher des détériorations sur l'élément d'équilibrage (3, 5) par des forces de traction axiales excessives, **caractérisé en ce que** l'accouplement est enfichable dans la direction axiale sur au moins un côté et la ou les butées axiales sont formées par des géométries en joint à baïonnette des deux parties de moyeu (2, 4).

4. Accouplement d'équilibrage selon l'une des revendications 1, 2 et 3, **caractérisé en ce que** l'élément d'équilibrage (3, 5) de l'accouplement est un soufflet (3), de préférence un soufflet métallique.

5. Accouplement d'équilibrage selon l'une des revendications 1, 2 et 3, **caractérisé en ce que** l'élément d'équilibrage (3, 5) de l'accouplement est un paquet de lamelles (5), de préférence un paquet de lamelles en acier.

6. Accouplement d'équilibrage selon l'une des revendications 1, 2 et 3, **caractérisé en ce que** les butées décrites sont disposées concentriquement à l'axe médian de l'accouplement au moyen de filetages, baïonnette ou éclisses élastiques dans la direction radiale.

7. Accouplement d'équilibrage selon l'une des revendications 1 à 5, **caractérisé en ce que** la ou les butées axiales sont munies d'un jeu radial mutuel d'une grandeur telle que, lorsque le déport latéral admissible de l'élément d'équilibrage (3, 5) est atteint, les éléments de butée butent les uns sur les autres dans la direction radiale et empêchent ainsi des déports latéraux excessifs de l'accouplement.
